# EUROPEAN PATENT APPLICATION

(11) **EP 4 600 226 A1**
(43) Date of publication of application: **13.08.2025**
(21) Application number: 23874551.7
(22) Date of filing: 23.08.2023
(51) Int. Cl.: C03C 8/12

(54) **FRIT AND METHOD FOR PRODUCING SAME, GLAZE COMPOSITION FOR GLASS LINING, GLASS LINING LAYER AND METHOD FOR FORMING SAME, AND GLASS LINED PRODUCT**

(30) Priority: 06.10.2022 JP 2022161926
(71) Applicant: NGK Insulators, Ltd., Nagoya-shi, Aichi 467-8530 (JP); NGK Chemitech, Ltd., Saitama 359-0001 (JP)
(72) Inventor: KAWASHIMA,Takashi, Tokorozawa-shi, Saitama 359-0001 (JP); GOTO,Hideki, Tokorozawa-shi, Saitama 359-0001 (JP); IWABUCHI,Muneyuki, Tokorozawa-shi, Saitama 359-0001 (JP)
(74) Representative: Mewburn Ellis LLP
(86) International application number: PCT/JP2023/030388
(87) International publication number: WO 2024/075419

(57) **Abstract**

A frit includes SiO₂ as a main component, and has a Na concentration of 300 mass ppm or less as determined by ICP atomic emission spectroscopy.

## Description

### FIELD OF THE INVENTION

The present invention is related to a frit useful for forming a glass lining layer and a method for producing the same. Further, the present invention is also related to a glaze composition for glass lining. Furthermore, the present invention is also related to a glass lining layer, a method for forming the same, and a glass lined product.

### BACKGROUND OF THE INVENTION

Glass lined products are used in fields such as the chemical, pharmaceutical, food and electronics industries, where high corrosion resistance and high product purity are required. Glass lined products are produced by fusing a glass lining composition containing a frit composed of a specific composition with SiO₂ as a main component onto the surface of a metal substrate as a base material such as a low carbon steel plate or a stainless-steel plate, thereby forming a glass lining layer that is corrosion resistant, inert, and heat resistant.

In order to match the thermal expansion coefficient with that of the metal substrate, to lower the temperature at which the glass is melted, or to ensure the solubility of a plurality of components, Na₂O has conventionally been blended into the frit constituting the glass lining composition. That is, Na₂O modifies the glass network structure of the glass lining layer, cuts the SiO₂ network structure, and acts to (i) increase the linear thermal expansion coefficient and (ii) increase solubility, and therefore is a component that has been valued for obtaining a high-performance glass lining layer (Patent Literature 4: Japanese Patent No. 3907978, Patent Literature 5: Japanese Patent No. 5860713). However, sodium components are easily eluted from the glass lining layer containing Na₂O, and this sodium component is mixed into a chemical liquid during a producing process of the chemical liquid. For this reason, glass lined products containing Na₂O cannot be used to produce chemical liquids which are used in the manufacturing processes of semiconductors or TFT-type panels.

Therefore, it has been proposed to obtain a glass lining layer with a small amount of Na elution by using a glaze composition for glass lining that does not contain Na₂O (Patent Literature 1: Japanese Patent No. 5148982, Patent Literature 2: Japanese Patent No. 5191384, Patent Literature 3: Japanese Patent No. 5164550).

### PRIOR ART

### Patent Literature

[Patent Literature 1] Japanese Patent No. 5148982
[Patent Literature 2] Japanese Patent No. 5191384
[Patent Literature 3] Japanese Patent No. 5164550
[Patent Literature 4] Japanese Patent No. 3907978
[Patent Literature 5] Japanese Patent No. 5860713

### SUMMARY OF THE INVENTION

As described above, glaze compositions for glass lining that do not contain Na₂O have been proposed, and they have been thought to be sufficient. However, with the recent trend toward higher performance in the fields of semiconductors and liquid crystals, there is a demand for further reduction in the amount of eluted sodium components. Specifically, it is desirable that the amount of Na eluted from the glass lining layer into pure water be 10 ppb by mass or less when the amount of water per approximately 4000 mm² of the surface area of the glass lining layer is 100 mL. This has been unknown with conventional analytical techniques, but it has become possible to identify this because the latest analytical techniques have lowered the detection limit for Na. However, it has been found that even if conventional glaze compositions for glass lining not containing Na₂O are used, it is not possible to meet such high requirements.

In view of the above circumstances, an object of the present invention in one embodiment is to provide a frit suitable for forming a glass lining layer from which the amount of elution of sodium components is extremely small. An object of the present invention in another embodiment is to provide a method for producing such a frit. An object of the present invention in yet another embodiment is to provide a glaze composition for glass lining comprising such a frit. An object of the present invention in yet another embodiment is to provide a glass lining layer which has an extremely small amount of elution of sodium components. An object of the present invention in yet another embodiment is to provide a method for forming such a glass lining layer. An object of the present invention in yet another embodiment is to provide a glass lined product comprising such a glass lining layer.

The present inventors have conducted extensive research to solve the above problems and have found that no blending of Na₂O into the frit is not sufficient, and that sodium components contained as impurities in the raw materials, as well as sodium components mixed in as impurities during the production process of the frit, have a significant effect on the amount of Na eluted from the glass lining layer. The present inventors then discovered the cause of the minute amount of sodium components that is mixed in at each step in the production of the frit. The present inventors then eliminated the causes of mixing of the sodium components as much as possible, thereby succeeding in forming a glass lining layer from which the amount of elution of sodium component is extremely small, thereby creating the present invention, which is exemplified as below.

### [Aspect 1]

A frit, comprising SiO₂ as a main component, and having a Na concentration of 300 mass ppm or less as determined by ICP atomic emission spectroscopy.

### [Aspect 2]

The frit according to aspect 1, comprising 40 to 75% by mass of SiO₂, 0 to 10% by mass of ZrO₂, 8 to 22% by mass of R₂O (wherein R represents one or more selected from a group consisting of Li, K, and Cs), and 1 to 7% by mass of R'O (wherein R' represents one or more selected from a group consisting of Mg, Ca, Sr, and Ba).

### [Aspect 3]

The frit according to aspect 1 or 2, wherein the Na concentration is 200 mass ppm or less.

### [Aspect 4]

The frit according to aspect 1 or 2, wherein the Na concentration is 100 mass ppm or less.

### [Aspect 5]

The frit according to any one of aspects 1 to 4, wherein a median diameter when a cumulative particle size distribution on a volume basis is measured by a laser diffraction method is 1.5 to 20 µm.

### [Aspect 6]

A method for producing a frit, the method comprising:
a step 1 of preparing a raw material formulation comprising SiO₂ as a main component and having a Na concentration of 150 mass ppm or less as determined by ICP atomic emission spectroscopy;
a step 2 of melting the raw material formulation placed in a crucible in a melting furnace, followed by rapid cooling to obtain a coarsely pulverized product, in which conditions for carrying out the step 2 comprise selecting materials for composing the crucible and an inner wall, a ceiling, and a hearth of the melting furnace, such that a concentration of Na contained in the coarsely pulverized product determined by ICP atomic emission spectroscopy is 200 mass ppm or less;
a step 3 of obtaining a finely pulverized product by pulverizing the coarsely pulverized product, in which conditions for carrying out the step 3 comprise selecting a material that comes into contact with the coarsely pulverized product during the pulverization, such that a concentration of Na contained in the finely pulverized product determined by ICP atomic emission spectroscopy is 250 mass ppm or less; and
a step 4 of obtaining a frit by classifying the finely pulverized product, in which conditions for carrying out the step 4 comprise selecting a material that comes into contact with the finely pulverized product during the classification, such that a concentration of Na contained in the frit determined by ICP atomic emission spectroscopy is 300 mass ppm or less.

### [Aspect 7]

The method according to aspect 6, wherein the raw material formulation prepared in the step 1 comprises 40 to 75% by mass of SiO₂, 0 to 10% by mass of ZrO₂, 8 to 22% by mass of R₂O (wherein R represents one or more elements selected from a group consisting of Li, K, and Cs), and 1 to 7% by mass of R'O (wherein R' represents one or more elements selected from the group consisting of Mg, Ca, Sr, and Ba).

### [Aspect 8]

The method according to aspect 6 or 7,
wherein the conditions for carrying out the step 2 comprise selecting a material for composing the crucible, such that the concentration of Na contained in the coarsely pulverized product is 180 mass ppm or less,
wherein the conditions for carrying out the step 3 comprise selecting a material that comes into contact with the coarsely pulverized product during the pulverization, such that the concentration of Na contained in the finely pulverized product is 190 mass ppm or less, and
wherein the conditions for carrying out the step 4 comprise selecting a material that comes into contact with the finely pulverized product during the classification, such that the concentration of Na contained in the frit is 200 mass ppm or less.

### [Aspect 9]

The method according to any one of aspects 6 to 8,
wherein the raw material formulation prepared in the step 1 has a Na concentration of 50 ppm by mass or less,
wherein the conditions for carrying out the step 2 comprise selecting a material for forming the crucible, such that the concentration of Na contained in the coarsely pulverized product is 80 mass ppm or less,
wherein the conditions for carrying out the step 3 comprise selecting a material that comes into contact with the coarsely pulverized product during the pulverization, such that the concentration of Na contained in the finely pulverized product is 90 mass ppm or less, and
wherein the conditions for carrying out the step 4 comprise selecting a material that comes into contact with the finely pulverized product during the classification, such that the concentration of Na contained in the frit is 100 mass ppm or less.

### [Aspect 10]

The method according to any one of aspects 6 to 9, wherein the frit obtained in the step 4 has a median diameter of 1.5 to 20 µm when a cumulative particle size distribution on a volume basis is measured by a laser diffraction method.

### [Aspect 11]

A glaze composition for glass lining, comprising the frit according to any one of aspects 1 to 5 and a dispersion medium.

### [Aspect 12]

A method for forming a glass lining layer, comprising applying the glaze composition for glass lining according to aspect 11 to a surface of a substrate, followed by firing to form a glass lining layer.

### [Aspect 13]

The method for forming a glass lining layer according to aspect 12, further comprising washing a surface of the glass lining layer after the firing with water.

### [Aspect 14]

A glass lining layer comprising SiO₂ as a main component, and having a Na concentration of 300 mass ppm or less as determined by ICP atomic emission spectroscopy.

### [Aspect 15]

The glass lining layer according to aspect 14, comprising 40 to 75% by mass of SiO₂, 0 to 10% by mass of ZrO₂, 8 to 22% by mass of R₂O (wherein R represents one or more selected from the group consisting of Li, K, and Cs), and 1 to 7% by mass of R'O (wherein R' represents one or more selected from the group consisting of Mg, Ca, Sr, and Ba).

### [Aspect 16]

The glass lining layer according to aspect 14 or 15, wherein the Na concentration is 200 mass ppm or less.

### [Aspect 17]

The glass lining layer according to aspect 14 or 15, wherein the Na concentration is 100 mass ppm or less.

### [Aspect 18]

A glass lined product comprising the glass-lining layer according to any one of aspects 14 to 17.

Use of the frit according to one embodiment of the present invention is extremely useful in forming a glass lining layer with an extremely small amount of elution of sodium components. For example, the amount of Na eluted from the glass lining layer obtained by using the frit can be suppressed to 10 ppb by mass or less, preferably 6 ppb by mass or less, and more preferably 4 ppb by mass or less. Therefore, one embodiment of the present invention can provide an excellent glass lined product that meets the high-performance needs of the semiconductor and liquid crystal fields.

### DETAILED DESCRIPTION OF THE INVENTION

### <1. Frit>

In one embodiment of the present invention, the frit comprises SiO₂ as a main component, and has a Na concentration of 300 mass ppm or less as determined by ICP atomic emission spectroscopy (Inductively Coupled Plasma Atomic Emission Spectroscopy) (ICP-AES). The lower the Na concentration in the frit is, the more desirable it is. Specifically, the Na concentration is preferably 200 ppm by mass or less, more preferably 150 ppm by mass or less, even more preferably 100 ppm by mass or less, and even more preferably 60 ppm by mass or less. By using a frit having a reduced Na concentration in this manner, it is possible to minimize the amount of Na eluted from the resulting glass lining layer. In order to reduce the Na concentration in the frit to such a level, no blending of Na₂O into the raw materials is not sufficient and it is also necessary to reduce as much as possible the sodium components contained as an impurity in the raw materials and the sodium components mixed in as an impurity during the production process of the frit.

The lower limit of the Na concentration in the frit determined by ICP atomic emission spectroscopy is not particularly set. However, taking into account the producing cost, the lower limit may be, for example, 10 ppm by mass or more, 20 ppm by mass or more, or 30 ppm by mass or more. Therefore, the Na concentration in the frit is in the range of 10 to 300 ppm by mass in one embodiment, in the range of 20 to 200 ppm by mass in another embodiment, and in the range of 30 to 100 ppm by mass in yet another embodiment.

The concentration of elements such as Na in the frit can be determined by ICP atomic emission spectroscopy (ICP-AES), and specifically, under the following measurement conditions.

Device name: Model PS3520UVDDII manufactured by Hitachi High-Tech Science Corporation.

Measurement procedure: Weigh out an appropriate amount of sample onto a platinum dish, add hydrofluoric acid, nitric acid, and perchloric acid, and decompose and evaporate to dryness. After allowing to cool, add hydrochloric acid and heat to dissolve the contents on the platinum dish. After the solution is adjusted to a prescribed volume, measurement is made using the above device. Measurement may also be made using devices with equivalent performance to the above device.

The fact that the frit comprises SiO₂ as the main component means that the mass concentration of SiO₂ is the highest in the frit. The concentration of SiO₂ in the frit is preferably 40 to 75% by mass, and more preferably 45 to 70% by mass. When the SiO₂ concentration in the frit is 40% by mass or more, the acid resistance and water resistance are improved. When the SiO₂ concentration in the frit is 75% by mass or less, the viscosity does not become too high and the linear thermal expansion coefficient does not become too small.

In a preferred embodiment, the frit comprises 40 to 75% by mass of SiO₂, 0 to 10% by mass of ZrO₂, 8 to 22% by mass of R₂O (wherein R represents one or more selected from the group consisting of Li, K, and Cs), and 1 to 7% by mass of R'O (wherein R' represents one or more selected from the group consisting of Mg, Ca, Sr, and Ba).

By setting the content of ZrO₂ in the frit 10% to by mass or less, crystallization becomes difficult and the viscosity can be prevented from becoming too high. In addition, by setting the content of ZrO₂ in the frit to 0% by mass or more, water resistance and alkali resistance are improved. The preferred content of ZrO₂ in the frit is in the range of 2 to 8% by mass.

By setting the content of R₂O in the frit to 22% by mass or less, the water resistance is less likely to decrease. In addition, by setting the content of R₂O in the frit to 8% by mass or more, the viscosity can be prevented from becoming too high. The preferred content of R₂O in the frit is within the range of 10 to 20% by mass.

By setting the content of R'O in the frit to 7% by mass or less, the acid resistance is improved. By setting the content of R'O in the frit to 1% by mass or more, the water resistance is improved. The preferred content of R'O in the frit is in the range of 2 to 5% by mass.

Further, the frit may comprise one or more selected from the group consisting of TiO₂, Al₂O₃, La₂O₃, B₂O₃ and ZnO. These components prevent phase separation and crystallization during firing of the glass lining, are strongly fixed in the glass network structure, fill and tighten the network, improve water resistance, and act to suppress the generation of bubbles.

Here, the content of TiO₂ in the frit is in the range 0 to 16% by mass, preferably 0 to 10% by mass, the content of Al₂O₃ is in the range 0 to 6% by mass, preferably 0 to 4% by mass, the content of La₂O₃ is in the range 0 to 4% by mass, preferably 0 to 2% by mass, the content of B₂O₃ is in the range 0 to 18% by mass, preferably 0 to 14% by mass, the content of ZnO is in the range of 0 to 6% by mass, preferably 0 to 4% by mass. When two or more types are used in combination, the total amount is within the range of 1 to 10% by mass, preferably 1 to 8% by mass. In addition, if the content of each of these components and the total content exceeds the upper limit, the melting point of the frit becomes high and the solubility is likely to deteriorate. Further, if the content is below the lower limit, the effect of adding the components is unlikely to be exhibited.

Furthermore, one or more coloring components selected from the group consisting of CoO, NiO, Sb₂O₃, Cr₂O₃, Fe₂O₃, MnO₂, SnO₂, and CeO₂ may be blended into the frit in an amount of up to 3% by mass in terms of Fe₂O₃ equivalent amount with respect to 100% by mass of the frit. From the viewpoint of visibility, the coloring component is preferably CoO, which is a blue component. This has the advantage that the surface condition, such as the corrosion state of the glass lining layer, can be easily recognized. Here, if the blending amount of the coloring component exceeds 3% by mass in terms of Fe₂O₃ equivalent amount, the acid resistance decreases and foaming phenomenon is likely to occur during firing. In addition, the entire text of Japanese Patent No. 5156277 is incorporated herein by reference.

In order to promote melting of the frit, up to 10% by mass of the SiO₂, Al₂O₃ and CaO components described above may be used in the form of a fluoride. In addition, as the fluoride, for example, K₂SiF₆, K₃AlF₆, CaF₂, and the like can be used.

In one embodiment, the median diameter of the frit may be 1.5 to 20 µm. By setting the upper limit of the median diameter of the frit to 20 µm or less, it becomes possible to apply a glaze with a very thin thickness, and the thickness of the obtained glass lining layer can be significantly reduced. In addition, since the gaps between the frit particles become smaller, the diameter of the bubbles present in the glass lining layer can be reduced. The median diameter of the frit is preferably 15 µm or less, and more preferably 10 µm or less. Furthermore, by setting the lower limit of the median diameter of the frit to 1.5 µm or more, there is obtained the advantage that aggregation of particles is less likely to occur, and the uniformity of the film thickness can be improved when the film is made thin. The median diameter of the frit is preferably 3 µm or more, and more preferably 5 µm or more. Therefore, the median diameter of the frit is preferably, for example, 3 to 15 µm, and more preferably 5 to 10 µm.

As used herein, the median diameter of the frit refers to the median diameter (D50) when the cumulative particle size distribution on a volume basis is measured by a laser diffraction method. In the Examples, the measurement was performed using a laser diffraction particle size distribution device (model: LMS-30) manufactured by SEISHIN Enterprise Co., Ltd.

### <2. Method for producing frit>

A frit having the above-mentioned particle size can be obtained, for example, by quenching and coarsely pulverizing a molten glass having a predetermined composition, followed by dry pulverization in a ball mill, and further performing classification and pulverization as appropriate. As described above, sodium components are inevitably mixed in the raw materials and during the producing process of the frit. Therefore, in order to produce a frit with an extremely small Na concentration, it is important to prevent the contamination of sodium components as much as possible in the raw materials used and in each producing process.

A method for producing a frit according to one embodiment of the present invention comprises:
a step 1 of preparing a raw material formulation comprising SiO₂ as a main component and having a Na concentration of 150 mass ppm or less as determined by ICP atomic emission spectroscopy;
a step 2 of melting the raw material formulation placed in a crucible in a melting furnace, followed by rapid cooling to obtain a coarsely pulverized product, in which conditions for carrying out the step 2 comprise selecting materials for composing the crucible and an inner wall, a ceiling, and a hearth of the melting furnace, such that a concentration of Na contained in the coarsely pulverized product determined by ICP atomic emission spectroscopy is 200 mass ppm or less;
a step 3 of obtaining a finely pulverized product by pulverizing the coarsely pulverized product, in which conditions for carrying out the step 3 comprise selecting a material that comes into contact with the coarsely pulverized product during the pulverization, such that a concentration of Na contained in the finely pulverized product determined by ICP atomic emission spectroscopy is 250 mass ppm or less; and
a step 4 of obtaining a frit by classifying the finely pulverized product, in which conditions for carrying out the step 4 comprise selecting a material that comes into contact with the finely pulverized product during the classification, such that a concentration of Na contained in the frit determined by ICP atomic emission spectroscopy is 300 mass ppm or less.

Hereinafter, each step will be described in detail below.

### (Step 1)

In the step 1, a raw material formulation is prepared. The raw material formulation comprises SiO₂ as a main component, and has a Na concentration of 150 ppm by mass or less as determined by ICP atomic emission spectroscopy. The raw material formulation preferably has a Na concentration of 100 ppm by mass or less, more preferably 50 ppm by mass or less, and even more preferably 20 ppm by mass or less, as determined by ICP atomic emission spectroscopy.

Although there is no particular lower limit set for the Na concentration in the raw material formulation determined by ICP atomic emission spectroscopy, taking into account the production costs, for example, the Na concentration may be 1 ppm by mass or more, 5 ppm by mass or more, or 10 ppm by mass or more. Therefore, the Na concentration in the raw material formulation is in the range of 1 to 150 ppm by mass in one embodiment, in the range of 5 to 100 ppm by mass in another embodiment, and in the range of 10 to 50 ppm by mass in yet another embodiment.

The concentration of elements such as Na in the raw material formulation can be determined by ICP atomic emission spectroscopy (ICP-AES), and specifically, under the following measurement conditions.

Device name: Model PS3520UVDDII manufactured by Hitachi High-Tech Science Corporation.

Measurement procedure: Weigh out an appropriate amount of sample onto a platinum dish, add hydrofluoric acid, nitric acid, and perchloric acid, and decompose and evaporate to dryness. After allowing to cool, add hydrochloric acid and heat to dissolve the contents on the platinum dish. After the solution is adjusted to a prescribed volume, measurement is made using the above device. Measurement may also be made using devices with equivalent performance to the above device.

The raw material formulation is usually provided as a mixture of raw material powders of the components constituting the frit described above (SiO₂, ZrO₂, R₂O, R'O, and the like). The raw material formulation may be prepared by blending raw material powders of the respective components such that the frit has a desired composition. Thus, in one embodiment, the raw material formulation comprises 40 to 75% by mass of SiO₂, 0 to 10% by mass of ZrO₂, 8 to 22% by mass of R₂O (wherein R represents one or more selected from the group consisting of Li, K, and Cs), and 1 to 7% by mass of R'O (wherein R' represents one or more selected from the group consisting of Mg, Ca, Sr, and Ba). When the desired frit comprises other components such as TiO₂, Al₂O₃, or the like, each component may be blended in accordance with the concentration of each component in the frit described above. The powders of each component used can be commercially available products, but it is desirable to use those with a high purity such that the concentration of Na as an impurity in the entire raw material formulation satisfies the concentration conditions described above.

In addition, when mixing the raw material powders of the respective components, it is preferable to use a mixer (such as a Loedige mixer, a V-type mixer, or a ball mill) that contains only a minute amount of Na or does not contain any Na at all, thereby minimizing the contamination of Na as an impurity in the raw material formulation. For example, among the members used in the mixer, those that come into contact with the raw material powders of each component are preferably made of a corrosion-resistant metal such as stainless steel, or a high-purity ceramic such as high-purity alumina or high-purity zirconia, or are lined with a fluororesin or the like.

### (Step 2)

In the step 2, a coarsely pulverized product is obtained. The coarsely pulverized product can be obtained by melting the raw material formulation placed in a crucible in a melting furnace, followed by rapid cooling. The temperature during melting is desirably equal to or higher than the melting point of the raw material formulation, and typically, the raw material formulation can be heated to 1,050 to 1,450 °C, more typically, 1,150 to 1,350 °C. Methods for rapid cooling after melting include water cooling, air cooling, and the like. When rapid cooling is performed, it is preferable to use water cooling with pure water or ultrapure water, or air cooling with clean air that has been passed through a high-performance air filter such as a HEPA filter, in order to minimize the contamination of Na as an impurity.

It is desirable to set the conditions for carrying out the step 2 such that the Na concentration of the coarsely pulverized product determined by ICP atomic emission spectroscopy is 200 ppm by mass or less, preferably 180 ppm by mass or less, more preferably 140 ppm by mass or less, even more preferably 120 ppm by mass or less, even more preferably 80 ppm by mass or less, and even more preferably 40 ppm by mass or less. In particular, in the step 2, since sodium components are likely to be mixed in from the crucible used, it is necessary to be careful in selecting the material composing the crucible. Specifically, when a typical clay or quartz crucible is used, sodium components tend to be mixed as impurities into the coarsely pulverized product. For this reason, it is desirable for the crucible to contain only a minute amount of Na or no Na at all, thereby minimizing the contamination of Na as an impurity during the melting. Specifically, it is preferable to use high purity ceramics such as high purity alumina and high purity zirconia, as well as precious metal crucibles such as platinum crucibles and platinum alloy crucibles as materials for the crucible.

In addition, it is also desirable that the melting furnace into which the crucible is placed contains only a minute amount of Na or no Na at all, thereby minimizing the contamination of Na as an impurity during the melting. Specifically, it is preferable to use high-purity ceramics such as high-purity alumina and high-purity zirconia as refractories for the inner walls, ceiling, hearth, and the like of the melting furnace.

There is no particular lower limit for the Na concentration in the coarsely pulverized product determined by ICP atomic emission spectroscopy. However, taking into account the production costs, the Na concentration may be, for example, 5 ppm by mass or more, 10 ppm by mass or more, or 20 ppm by mass or more. Therefore, the Na concentration in the coarsely pulverized product is in the range of 5 to 200 ppm by mass in one embodiment, in the range of 10 to 180 ppm by mass in another embodiment, and in the range of 20 to 140 ppm by mass in yet another embodiment.

The concentration of elements such as Na in the coarsely pulverized product can be determined by ICP atomic emission spectroscopy (ICP-AES), and specifically, under the following measurement conditions.

Device name: Model PS3520UVDDII manufactured by Hitachi High-Tech Science Corporation.

Measurement procedure: Weigh out an appropriate amount of sample onto a platinum dish, add hydrofluoric acid, nitric acid, and perchloric acid, and decompose and evaporate to dryness. After allowing to cool, add hydrochloric acid and heat to dissolve the contents on the platinum dish. After the solution is adjusted to a prescribed volume, measurement is made using the above device. Measurement may also be made using devices with equivalent performance to the above device.

### (Step 3)

In the step 3, the coarsely pulverized product is pulverized to obtain a finely pulverized product. Examples of the pulverization method include a method using pulverization equipment such as a ball mill or a bead mill. The median diameter of the finely pulverized product may be, for example, 10 to 50 µm, and is preferably 20 to 40 µm. The median diameter of the finely pulverized product refers to the median diameter (D50) when the cumulative particle size distribution on a volume basis is measured by a laser diffraction method. In the Examples, the measurement was performed using a laser diffraction particle size distribution device (model: LMS-30) manufactured by SEISHIN Enterprise Co., Ltd.

It is desirable to set the conditions for carrying out the step 3 such that the Na concentration of the finely pulverized product determined by ICP atomic emission spectroscopy is 250 ppm by mass or less, preferably 190 ppm by mass or less, more preferably 150 ppm by mass or less, even more preferably 130 ppm by mass or less, even more preferably 90 ppm by mass or less, and even more preferably 50 ppm by mass or less. In particular, in the step 3, it is desirable to use pulverization equipment that contains only a minute amount of Na or no Na at all, thereby minimizing the contamination of Na as an impurity during the pulverization. Specifically, it is preferable to use high purity ceramics such as high purity alumina and high purity zirconia for the members that come into contact with the coarsely pulverized product during pulverization, such as the pulverization media and the container for containing the pulverization media.

There is no particular lower limit for the Na concentration in the finely pulverized product determined by ICP atomic emission spectroscopy. However, taking into account the production costs, it may be, for example, 5 ppm by mass or more, 10 ppm by mass or more, or 20 ppm by mass or more. Therefore, the Na concentration in the finely pulverized product is in the range of 5 to 250 ppm by mass in one embodiment, in the range of 10 to 190 ppm by mass in another embodiment, and in the range of 20 to 150 ppm by mass in yet another embodiment.

The concentration of elements such as Na in the finely pulverized product can be determined by ICP atomic emission spectroscopy (ICP-AES), and specifically, under the following measurement conditions.

Device name: Model PS3520UVDDII manufactured by Hitachi High-Tech Science Corporation.

Measurement procedure: Weigh out an appropriate amount of sample onto a platinum dish, add hydrofluoric acid, nitric acid, and perchloric acid, and decompose and evaporate to dryness. After allowing to cool, add hydrochloric acid and heat to dissolve the contents on the platinum dish. After the solution is adjusted to a prescribed volume, measurement is made using the above device. Measurement may also be made using devices with equivalent performance to the above device.

### (Step 4)

In the step 4, the finely pulverized material is classified to obtain frit having a desired particle size. The preferred particle size (median diameter) of the frit is as described above. As a classification method, a classifier such as a vibrating sieve can be used.

It is desirable to set the conditions for carrying out the step 4 such that the Na concentration of the frit determined by ICP atomic emission spectroscopy is 300 ppm by mass or less, preferably 200 ppm by mass or less, more preferably 150 ppm by mass or less, even more preferably 100 ppm by mass or less, and even more preferably 60 ppm by mass or less. In particular, in the step 4, it is desirable to use a classifier that contains only a minute amount of Na or no Na at all, thereby minimizing the contamination of Na as an impurity during the classification. Specifically, it is preferable to use a metal having high corrosion resistance and wear resistance, such as stainless steel, for the members that come into contact with the finely pulverized product during classification.

There is no particular lower limit of the Na concentration in the frit determined by ICP atomic emission spectroscopy. However, taking into account the producing cost, the lower limit may be, for example, 10 ppm by mass or more, 20 ppm by mass or more, or 30 ppm by mass or more. Therefore, the Na concentration in the frit is in the range of 10 to 300 ppm by mass in one embodiment, in the range of 20 to 200 ppm by mass in another embodiment, and in the range of 30 to 100 ppm by mass in yet another embodiment.

The method for measuring the Na concentration in the frit by ICP atomic emission spectroscopy is as described above.

### <3. Glaze composition for glass lining>

A glaze composition for glass lining according to one embodiment of the present invention comprises the above-mentioned frit and a dispersion medium. The dispersion medium to be used is not limited, but may be water or a water-soluble dispersion medium such as alcohol, with water being preferred because it is odorless and improves the working environment. It is desirable that the dispersion medium contain only a minute amount of Na or does not contain any Na at all. As a method for reducing the concentration of Na in the dispersion medium, a method of carrying out an ion exchange treatment can be mentioned.

As the water, water having a specific resistance of 0.5 MΩ·cm or more at 25 °C, for example, pure water (example: specific resistance at 25 °C: 0.5 to 1.0 MΩ·cm) and ultrapure water (example: specific resistance at 25 °C: 17.5 to 18.0 MΩ·cm) can be suitably used. An example of the alcohol is ethanol. It is preferable to use alcohol with a purity of 99.5% by volume or more. As the dispersion medium, one type may be used alone, and two or more types may be used in combination. The dispersion medium may be added in an amount of, but not limited to, 1 to 40 parts by mass, preferably 5 to 30 parts by mass, with respect to 100 parts by mass of the frit. The alcohol concentration in the glaze composition for glass lining is preferably 1% by mass or less, more preferably 0.1% by mass or less, and even more preferably 0% by mass.

In a preferred embodiment, the glaze composition for glass lining may further comprise metal fibers. By comprising metal fibers in the glaze composition for glass lining, the electrical resistance of the glass lining layer is reduced, making it possible to suppress static electricity buildup in the glass lined product and also to improve thermal conductivity.

The metal fibers are not limited to, but preferably include one or more types selected from the group consisting of stainless steel-based metal fibers, precious metal-based metal fibers, and alloy fibers of platinum and platinum group metals. Examples of the precious metal-based metal fibers that can be used include Ag fibers (volume resistivity: 1.6 × 10⁻⁸ Ωm), Au fibers (volume resistivity: 2.4 × 10⁻⁸ Ωm), and Pt fibers (volume resistivity: 10.6 × 10⁻⁸ Ωm). As the alloy fiber of platinum and a platinum group metal, for example, an alloy of Pt and one or more elements selected from the group consisting of Pd, Ir, Rh, Os, and Ru can be used.

The amount of metal fibers added to the frit is preferably 0.01 to 5 parts by mass with respect to 100 parts by mass of the frit. When the amount of metal fibers added is 0.01 part by mass or more with respect to 100 parts by mass of the frit, the electrical conductivity can be significantly improved. The lower limit of the amount of metal fibers added is more preferably 0.05 parts by mass or more, and even more preferably 0.1 parts by mass or more, with respect to 100 parts by mass of the frit. In addition, by adding the metal fibers in an amount of 5 parts by mass or less with respect to 100 parts by mass of the frit, spray applicability is improved. The upper limit of the amount of metal fibers added is more preferably 2 parts by mass or less, and even more preferably 1 part by mass or less, with respect to 100 parts by mass of the frit.

The diameter of the metal fibers is preferably 0.1 to 2 µm, more preferably 0.2 to 2 µm, and even more preferably 0.3 to 1 µm. When the diameter of the metal fibers is 0.1 µm or more, the metal fibers can be processed at low cost. Furthermore, by having the diameter of the metal fiber be 2 µm or less, spray application properties are improved. As used herein, the diameter of the metal fiber refers to the diameter of a circle equal to the area of the cross section perpendicular to the direction in which the metal fiber extends.

The length of the metal fibers is preferably 50 to 1000 µm, and more preferably 100 to 800 µm. When the length of the metal fibers is 50 µm or more, the effect of adding the metal fibers is more likely to be significantly exhibited. In addition, when the length is 1000 µm or less, spray application properties are improved.

In addition, the metal fibers preferably have an average aspect ratio of length/diameter of 50 or more. When the average aspect ratio of the length/diameter of the metal fibers is 50 or more, the electrical resistance of the glass lining layer can be reduced without blending a large amount of the metal fibers.

The glaze composition for glass lining may contain a thickener. In particular, when the glaze composition for glass lining comprises metal fibers, it is preferable to add a thickener. By adding a thickener, it is possible to prevent the metal fibers from settling and being unevenly distributed downward in the glaze composition for glass lining. This can provide an effect of improving the electrical conductivity and thermal conductivity of the glass lining layer. The thickener is preferably added in an amount of 32 to 65 parts by mass, more preferably 38 to 60 parts by mass, and even more preferably 45 to 55 parts by mass, calculated as solid content, with respect to 100 parts by mass of the frit. By adding 32 parts by mass or more of the thickener with respect to 100 parts by mass of the frit, the effect of preventing the sedimentation of the metal fibers can be improved. In addition, by adding 65 parts by mass or less of the thickener with respect to 100 parts by mass of the frit, the effect of improving spray applicability can be obtained.

As the thickener, although there is no limitation, a cellulose derivative can be suitably used. Examples of cellulose derivatives include CMC (carboxymethyl cellulose), HEC (hydroxyethyl cellulose), HPMC (hydroxypropyl methyl cellulose), HPC (hydroxypropyl cellulose), and MC (methyl cellulose). Among these, CMC (carboxymethyl cellulose) is preferred because it suppresses the generation of bubbles during baking. As the thickeners, one type may be used alone, or two or more types may be used in combination.

The glaze composition for glass lining may comprise a dispersant. In particular, when the glaze composition for glass lining comprises metal fibers, it is preferable to add a dispersant. By adding a dispersant, the uniform dispersion of the metal fibers can be improved, and this can provide the effects of improving electrical conductivity and thermal conductivity. Furthermore, a glaze composition suitable for spray application can be obtained without using alcohol as a dispersion medium. The dispersant is preferably added in an amount of 0.01 to 0.2 parts by mass, more preferably 0.02 to 0.1 parts by mass, and even more preferably 0.03 to 0.08 parts by mass, with respect to 100 parts by mass of the frit. By adding the dispersant in an amount of 0.01 part by mass or more with respect to 100 parts by mass of the frit, the dispersibility of the metal fibers can be improved. In addition, by adding the dispersant in an amount of 0.2 parts by mass or less with respect to 100 parts by mass of the frit, an odor suppression effect can be obtained.

As the dispersant, though not limited, in order to suppress the generation of bubbles during firing, polymeric dispersants such as polycarboxylic acid-based dispersants, naphthalenesulfonic acid-formalin condensation-based dispersants, polyethylene glycol, polyether-based dispersants, and polyalkylene polyamine-based dispersants can be preferably used. As the polycarboxylic acid-based dispersant, for example, a polycarboxylic acid ammonium salt can be suitably used. As the dispersant, one type may be used alone, or two or more types may be used in combination.

In addition, additives commonly used in glass linings (such as clay, barium chloride, sodium nitrite, and the like) can be added to the glaze composition for glass lining. The clay may be added in an amount of, but not limited to, 3 to 8 parts by mass, preferably 5 to 7 parts by mass, with respect to 100 parts by mass of the frit. For barium chloride, although not limited, it can be added in an amount of 0.05 to 0.3 parts by mass, preferably 0.1 to 0.2 parts by mass, with respect to 100 parts by mass of frit. For sodium nitrite, although not limited, it can be added in an amount of 0.1 to 0.6 parts by mass, preferably 0.2 to 0.5 parts by mass, with respect to 100 parts by mass of the frit.

It is also desirable that the metal fibers, thickeners, dispersants and other additives contain only a minute amount of Na or no Na at all. For this reason, it is preferable to select additives of a grade that contains as little Na as possible or that does not contain Na, and to keep the amount added to a minimum.

The glaze composition for glass lining can be produced by appropriately mixing one or more of the above-mentioned additives in addition to the frit and the dispersion medium. The components constituting the glaze composition for glass lining can be mixed by putting the components in a mixer in a given ratio and stirring them in the mixer. As this time, it is preferable to use a mixer (vertical mixer, ball mill, or the like) that contains a minute amount of Na or does not contain any Na at all, thereby minimizing the contamination of Na as an impurity in the glaze composition for glass lining. For example, among the members used in the mixer, those that come into contact with each component are preferably made of a corrosion-resistant metal such as stainless steel, or a high-purity ceramic such as high-purity alumina or high-purity zirconia, or are preferably lined with a fluororesin or the like.

The glaze composition for glass lining according to one embodiment of the present invention has a Na concentration of 300 mass ppm or less as determined by ICP atomic emission spectroscopy (Inductively Coupled Plasma Atomic Emission Spectroscopy). The lower the Na concentration in the glaze composition for glass lining is, the more desirable it is. Specifically, the Na concentration is preferably 200 ppm by mass or less, more preferably 150 ppm by mass or less, even more preferably 100 ppm by mass or less, and even more preferably 80 ppm by mass or less. By using a glaze composition for glass lining having a reduced Na concentration in this way, it is possible to minimize the amount of Na eluted from the resulting glass lining layer.

The concentration of elements such as Na in the glaze composition for glass lining can be determined by ICP atomic emission spectroscopy (ICP-AES), and specifically, under the following measurement conditions.

Device name: Model PS3520UVDDII manufactured by Hitachi High-Tech Science Corporation.

A sample is placed in an evaporating dish made of high-purity ceramics and dried in a clean dryer kept at a constant temperature to form an aggregate. An appropriate amount is then weighed out onto a platinum dish, and hydrofluoric acid, nitric acid, and perchloric acid are added to decompose and evaporate to dryness. After allowing to cool, add hydrochloric acid and heat to dissolve the contents on the platinum dish. After the solution is adjusted to a prescribed volume, measurement is made using the above device. Measurement may also be made using devices with equivalent performance to the above device. It should be noted that the concentration determined here is a concentration when the solid content is taken as 100% by mass, and the solvent is not taken into consideration.

### <4. Glass lining layer>

The glass lining layer according to one embodiment of the present invention can be formed by applying the above-mentioned glaze composition for glass lining to the surface of a substrate, followed by firing. The glass lining layer according to one embodiment of the present invention may be formed on the surface of a substrate on which no other glass lining layer is formed, or may be formed on the surface of a substrate on which a different glass lining layer is formed, that is, on the surface of a different glass lining layer (such as a ground coat layer or an intermediate layer). The ground coat layer and/or the intermediate layer may contain Na₂O. The glass lining layer according to a preferred embodiment of the present invention constitutes a cover coat layer located at the outermost layer among the glass lining layers. The substrate is typically a metal substrate. Examples of the metal substrate include, but are not limited to, iron alloys such as low carbon steel and stainless steel. The shape of the metal substrate is not particularly limited, but may be wall-shaped, plate-shaped, wing-shaped, rod-shaped, or the like.

The conditions for the glazing operation, firing, and the like for forming the glass lining layer are not particularly limited, and conventional and well-known operations for glass lining can be used. However, the glazing operation is preferably carried out by spraying, since this makes it easier to control the thickness. In addition, it is desirable that the equipment used in the glazing operation, such as tanks, hoses, spray guns, and the like, contain only minute amounts of Na or no Na at all, such that Na is not mixed in as an impurity as possible during the glazing. Specifically, among the equipment used in the glazing operation, it is preferable to use corrosion-resistant metals such as stainless steel and aluminum, fluororesins, nylon resins, or the like for the members that come into contact with the glaze composition for glass lining.

The firing furnace is preferably one which contains only a minute amount of Na or no Na at all, thereby minimizing the contamination of Na as an impurity during firing. Specifically, it is preferable to use high-purity ceramics such as high-purity alumina and high-purity zirconia for the refractories used in the inner walls, ceiling, hearth, and the like of the firing furnace. The firing temperature is preferably 700 to 900 °C to suppress deformation of the base material.

The glass lining layer according to one embodiment of the present invention comprises SiO₂ as the main component, and has a Na concentration of 300 mass ppm or less as determined by ICP atomic emission spectroscopy. The lower the Na concentration in the glass lining layer is, the more desirable it is. Specifically, it is preferably 200 ppm by mass or less, more preferably 150 ppm by mass or less, even more preferably 100 ppm by mass or less, and even more preferably 80 ppm by mass or less.

By reducing the concentration of Na contained in the glass lining layer in this manner, it is possible to make the amount of Na eluted from the glass lining layer extremely small. Furthermore, when forming the glass lining layer, if raw materials with high purity are used, and the producing equipment used in the producing process is made of carefully selected materials to prevent contamination with sodium components, as a result, the glass lining layer according to one embodiment of the present invention can minimize not only the elution of Na but also the elution of other impurity metal components.

The amount of Na eluted from the glass lining layer can be further reduced by washing the outer surface of the glass lining layer with water (example: specific resistance of 0.1 to 18.0 MΩ·cm at 25 °C), preferably pure water (example: specific resistance at 25 °C: 0.5 to 1.0 MΩ·cm) and ultrapure water (example: specific resistance at 25 °C: 17.5 to 18.0 MΩ·cm). From the viewpoint of enhancing the washing effect, the lower limit of the temperature of the water used for the washing is preferably 10 °C or higher, more preferably 40 °C or higher, even more preferably 60 °C or higher, and even more preferably 80 °C or higher. There is no particular upper limit on the temperature of the water used for the washing, but since the higher the water temperature and resistivity is, the more likely corrosion of the glass lining layer surface will progress, it is preferable that the temperature be less than 100 °C, and more preferably 90 °C or less.

The lower limit of the Na concentration in the glass lining layer determined by ICP atomic emission spectroscopy is not particularly set, but in consideration of the producing cost, the lower limit may be, for example, 20 ppm by mass or more, 30 ppm by mass or more, or 40 ppm by mass or more. Therefore, the Na concentration in the glass lining layer is in the range of 20 to 300 ppm by mass in one embodiment, in the range of 30 to 200 ppm by mass in another embodiment, and in the range of 40 to 100 ppm by mass in yet another embodiment.

The concentration of elements such as Na in the glass lining layer can be determined by ICP atomic emission spectroscopy (ICP-AES), and specifically, under the following measurement conditions.

Device name: Model PS3520UVDDII manufactured by Hitachi High-Tech Science Corporation.

The glass lining layer is mechanically broken such that impurities such as Na are not mixed therein, and the broken pieces are collected and used as samples for analysis. An appropriate amount of the sample is weighed out onto a platinum dish, and hydrofluoric acid, nitric acid, and perchloric acid are added to decompose and evaporate to dryness. After allowing to cool, add hydrochloric acid and heat to dissolve the contents on the platinum dish. After the solution is adjusted to a prescribed volume, measurement is made using the above device. Measurement may also be made using devices with equivalent performance to the above device.

The fact that the glass lining layer comprises SiO₂ as the main component means that the mass concentration of SiO₂ is the highest in the glass lining layer. The concentration of SiO₂ in the glass lining layer is preferably 40 to 75% by mass, and more preferably 45 to 70% by mass. When the concentration of SiO₂ in the glass lining layer is 40% by mass or more, the acid resistance and water resistance are improved. When the concentration of SiO₂ in the glass lining layer is 75% by mass or less, the viscosity does not become too high and the linear thermal expansion coefficient does not become too small.

In a preferred embodiment, the glass lining layer comprises 40 to 75% by mass of SiO₂, 0 to 10% by mass of ZrO₂, 8 to 22% by mass of R₂O (wherein R represents one or more selected from the group consisting of Li, K, and Cs), and 1 to 7% by mass of R'O (wherein R' represents one or more selected from the group consisting of Mg, Ca, Sr, and Ba).

By setting the content of ZrO₂ in the glass lining layer to 10% by mass or less, crystallization becomes difficult and the viscosity can be prevented from becoming too high. In addition, by setting the content of ZrO₂ in the glass lining layer to 0% by mass or more, water resistance and alkali resistance are improved. The preferred content of ZrO₂ in the glass lining layer is in the range of 2 to 8% by mass.

By setting the content of R₂O in the glass lining layer to 22% by mass or less, the water resistance is less likely to decrease. In addition, by setting the content of R₂O in the glass lining layer to 8% by mass or more, the viscosity can be prevented from becoming too high. The preferred content of R₂O in the glass lining layer is within the range of 10 to 20% by mass.

By setting the content of R'O in the glass lining layer to 7% by mass or less, the acid resistance is improved. By setting the content of R'O in the glass lining layer to 1% by mass or more, the water resistance is improved. The preferred content of R'O in the glass lining layer is in the range of 2 to 5% by mass.

Other than the above, the composition of the glass lining layer is basically the same as the composition of the frit, so a detailed description will be omitted.

The thickness of the glass lining layer formed by applying the glaze composition for glass lining onto the surface of a substrate, followed by firing can be appropriately adjusted. Exemplarily, the thickness of the glass lining layer may be 0.6 to 2.4 mm, typically 0.8 to 2.0 mm. The glass lining layer may be composed of one layer or multiple layers. When the glass lining layer is a cover coat layer, it preferably has a thickness of 0.1 to 1.3 mm. When the thickness of the cover coat layer is 1.3 mm or less, the thermal conductivity can be increased. The thickness of the cover coat layer is more preferably 1.0 mm or less, and even more preferably 0.8 mm or less. In addition, by making the thickness of the cover coat layer 0.1 mm or more, there is obtained an advantage that Na elution can be effectively suppressed. The thickness of the cover coat layer is more preferably 0.2 mm or more, and even more preferably 0.3 mm or more.

### <5. Glass lined product>

According to one embodiment of the present invention, there is provided a glass lined product comprising the glass lining layer described above. In one embodiment, the glass lined product comprises a substrate and one or more of the above-described glass lining layers formed on a surface of the substrate. Glass lined products include, but are not limited to, reactors, stirring blades, tanks (example: stirring vessels), heat exchangers, dryers, evaporators, filters, sampling baffles, and the like.

### EXAMPLES

Hereinafter, Examples of the present invention will be described below together with Comparative Examples. These Examples are provided for a better understanding of the present invention and its advantages, and are not intended to limit the present invention.

### <1. Example 1>

### (1-1. Raw material formulation)

A raw material formulation was prepared by mixing the raw material powders of the respective components in a mixer in the prescribed ratios to obtain a frit having the composition shown in Table 1.. At this time, the raw material powders of the components used were commercially available products, but all were high purity (99% by mass or more). In addition, the mixer used was a Lödige mixer manufactured by Gebrüder Lödige Maschinenbau GmbH of Germany, which uses stainless steel for the members that come into contact with the raw material powders of each component, in order to minimize the contamination of Na as an impurity in the raw material formulation.

**Table 1**

| Components | % by mass |
|---|---|
| SiO₂ + ZrO₂ | 71 (However, 68 for SiO₂) |
| K₂O + Li₂O | 17 |
| CaO +BaO + MgO | 5 |
| B₂O₃ + Al₂O₃ + TiO₂ + ZnO | 6 |
| CoO + CeO₂ | 1 |

The Na concentration in the resulting raw material formulation was determined by ICP atomic emission spectroscopy under the above-mentioned measurement conditions. The results are shown in Table 2.

### (1-2. Coarsely pulverized product)

The above raw material formulation was placed in a quartz crucible and melted by heating in a melting furnace at 1260 °C for 4 hours, and then the melt was rapidly cooled by water-cooling with tap water (specific resistance at 25 °C: 0.005 MΩ·cm) to obtain a coarsely pulverized product.

The Na concentration in the resulting coarsely pulverized product was determined by ICP atomic emission spectroscopy under the above-mentioned measurement conditions. The results are shown in Table 2.

### (1-3. Finely pulverized product)

The coarsely pulverized product obtained above was dry-pulverized in a ball mill to produce a finely pulverized product having a median diameter of 20 to 40 µm. Alumina balls with a purity of 92% by mass were used as the pulverization media, and alumina with a purity of 92% by mass was used for the members that come into contact with the coarsely pulverized product during the pulverization, such as the container for the pulverization media.

The Na concentration in the resulting finely pulverized product was determined by ICP atomic emission spectroscopy under the above-mentioned measurement conditions. The results are shown in Table 2.

### (1-4. Frit)

The finely pulverized product obtained above was classified using a vibrating sieve to produce frit having a median diameter of 20 µm. In order to minimize the contamination of Na as an impurity during classification, stainless steel was used for the members that come into contact with the finely pulverized material during the classification.

The Na concentration in the obtained frit was determined by ICP atomic emission spectroscopy under the above-mentioned measurement conditions. The results are shown in Table 2.

### (1-5. Glaze composition for glass lining)

A 1% by mass aqueous solution of CMC was added to a mixer (vertical mixer) such that the amount was 45 parts by mass in terms of solid content with respect to 100 parts by mass of the frit prepared above, and the mixture was stirred for 5 minutes. Thereafter, 15 parts by mass of ethanol with a purity of 99.5% by volume and 30 parts by mass of tap water (specific resistance at 25 °C: 0.005 MΩ·cm) (dispersion medium) were added to the mixer and stirred for additional 20 minutes to obtain a slurry-like glaze composition for glass lining. The CMC aqueous solution was prepared by mixing CMC and the tap water in a given ratio using a vertical mixer. In addition, stainless steel was used for all parts of the mixer that come into contact with the frit, dispersion medium, and additives. However, because these were used for mass production of glaze compositions to which Na components such as Na₂O are added, Na was attached to them and could not be completely removed by washing.

The Na concentration in the obtained glaze composition for glass lining was determined by ICP atomic emission spectroscopy under the above-mentioned measurement conditions. The results are shown in Table 2.

### (1-6. Glass lining layer)

A round bar made of low carbon steel having a diameter of 13 mm and a length of 80 mm was prepared. A ground coat layer having a thickness of 0.3 to 0.4 mm was obtained by performing the following step once in which the surface of the round bar was spray-coated with a glaze composition for glass lining for a ground coat layer, followed by firing at 860 °C for 15 minutes. The glaze composition was prepared by adding 50% by mass of silica stone, 20% by mass of an CMC aqueous solution (concentration: 1% by mass), 5% by mass of sodium nitrite aqueous solution (concentration: 0.3% by mass), 20% by mass of ethanol, and 30% by mass of tap water to a frit in outer percentages with respect to 100% by mass of the frit. The frit had a composition of SiO₂ + ZrO₂: 57.5% by mass, Na₂O + K₂O + Li₂O: 19% by mass, CaO + BaO + MgO: 3.5% by mass, B₂O₃ + Al₂O₃ + TiO₂ + ZnO: 17% by mass, CoO + NiO + MnO₂ + CeO₂: 3% by mass.

Next, an intermediate layer having a thickness of 0.7 to 0.8 mm was obtained by performing the following step three times in which the ground coat layer was spray-coated with a glaze composition for glass lining for an intermediate layer, followed by firing at 800 °C for 15 minutes. The glaze composition was prepared by adding 20% by mass of an aqueous CMC solution (concentration: 1% by mass), 20% by mass of ethanol, and 30% by mass of tap water to a frit in outer percentages with respect to 100% by mass of the frit. The frit had a composition of SiO₂ + ZrO₂: 71% by mass, Na₂O + K₂O + Li₂O: 17% by mass, CaO + BaO + MgO: 5% by mass, B₂O₃ + Al2O₃ + TiO₂ + ZnO: 6% by mass, CoO + CeO₂: 1% by mass.

Next, a cover coat layer having a thickness of about 0.1 to 0.4 mm was obtained by performing the following step 1 to 3 times in which the above-obtained glaze composition for glass lining was applied and fired at 800 °C for 15 minutes..

In addition, among the equipment used for the glazing operation, a dedicated booth that had been cleaned and washed was used as the glazing booth for the cover coat layer, and corrosion-resistant metals (stainless steel or aluminum), fluororesin, and nylon resin were used for the members that came into contact with the glaze composition for glass lining. Further, in order to minimize the contamination of Na as an impurity during the firing, high purity ceramics were used for the refractories used for the inner walls, ceiling, hearth, and the like of the firing furnace.

The Na concentration in the cover coat layer of the obtained glass lining layer was determined by ICP atomic emission spectroscopy under the above-mentioned measurement conditions. The results are shown in Table 2.

### <2. Example 2>

### (2-1. Raw material formulation)

A raw material formulation was prepared by mixing the powders of the respective components in a mixer in the prescribed ratios to obtain a frit having the composition shown in Table 1. However, as the raw material powders of the components used in this raw material formulation were commercially available products, which were not particularly pure (98% by mass or less), the Na concentration was slightly higher than in Example 1. In addition, the Na concentration in this raw material formulation was equivalent to that of the raw material formulation used in the Examples of Japanese Patent No. 5,191,384.

The Na concentration in the resulting raw material formulation was determined by ICP atomic emission spectroscopy under the above-mentioned measurement conditions. The results are shown in Table 2.

### (2-2. Coarsely pulverized product)

The raw material formulation obtained above was placed in a platinum crucible and melted by heating in a melting furnace at 1260 °C for 4 hours, and then the melt was rapidly cooled by water-cooling with pure water (specific resistance at 25 °C: 1.0 MΩ·cm) to obtain a coarsely pulverized product. In order to minimize the contamination of Na as an impurity, high purity ceramics were used for the refractories used in the inner walls, ceiling, hearth, and the like of the melting furnace.

The Na concentration in the resulting coarsely pulverized product was determined by ICP atomic emission spectroscopy under the above-mentioned measurement conditions. The results are shown in Table 2.

### (2-3. Finely pulverized product)

The coarsely pulverized product obtained above was dry-pulverized in a ball mill to produce a finely pulverized product having a median diameter of 20 to 40 µm. In order to minimize the contamination of Na as an impurity during pulverization, high-purity alumina balls with a purity of 99.5% by mass were used as the pulverization media, and high-purity alumina with a purity of 99.5% by mass was used for the members that come into contact with the coarsely pulverized product during the pulverization, such as the container for the pulverization medium.

The Na concentration in the resulting finely pulverized product was determined by ICP atomic emission spectroscopy under the above-mentioned measurement conditions. The results are shown in Table 2.

### (2-4. Frit)

The finely pulverized product obtained above was classified in the same manner as in Example 1 to prepare a frit.

The Na concentration in the obtained frit was determined by ICP atomic emission spectroscopy under the above-mentioned measurement conditions. The results are shown in Table 2.

### (2-5. Glaze composition for glass lining)

Pure water (specific resistance at 25 °C: 1.0 MΩ·cm) was used instead of tap water as the water used to prepare the CMC aqueous solution and as the dispersion medium to be put into the mixer. As the mixer, a vertical mixer was used in which all the members that came into contact with each component were made of stainless steel. In order to minimize the contamination of Na as an impurity in the glaze composition for glass lining, it was a dedicated machine prepared for use with glaze compositions to which no Na components should be added. Other than that, a glaze composition for glass lining was obtained in the same manner as in Example 1 using the frit obtained above.

The Na concentration in the obtained glaze composition for glass lining was determined by ICP atomic emission spectroscopy under the above-mentioned measurement conditions. The results are shown in Table 2.

### (2-6. Glass lining layer)

The above obtained glaze composition for glass lining was used for glaze application and fired under the same conditions as in Example 1 to obtain a glass lining layer. In order to minimize the contamination of Na as an impurity during the glazing, among the equipment used in the glazing operation, a dedicated booth that had been cleaned and washed was used as the glazing booth for the cover coat layer, and corrosion-resistant metals (stainless steel or aluminum), fluororesin, and nylon resin were used for the members that came into contact with the glaze composition for glass lining. Further, in order to minimize the contamination of Na as an impurity during firing, high purity ceramics were used for the refractories used for the inner walls, ceiling, hearth, and the like of the firing furnace.

The Na concentration in the cover coat layer of the obtained glass lining layer was determined by ICP atomic emission spectroscopy under the above-mentioned measurement conditions. The results are shown in Table 2.

### <3. Example 3>

### (3-1. Raw material formulation)

The same raw material formulation as in Example 1 was prepared.

The Na concentration in the resulting raw material formulation was determined by ICP atomic emission spectroscopy under the above-mentioned measurement conditions. The results are shown in Table 2.

### (3-2. Coarsely pulverized product)

The raw material formulation obtained above was melted and rapidly cooled in the same manner as in Example 2 to obtain a coarsely pulverized product.

The Na concentration in the resulting coarsely pulverized product was determined by ICP atomic emission spectroscopy under the above-mentioned measurement conditions. The results are shown in Table 2.

### (3-3. Finely pulverized product)

The coarsely pulverized product obtained above was dry-pulverized in the same manner as in Example 2 to obtain a finely pulverized product.

The Na concentration in the resulting finely pulverized product was determined by ICP atomic emission spectroscopy under the above-mentioned measurement conditions. The results are shown in Table 2.

### (3-4. Frit)

The finely pulverized product obtained above was classified in the same manner as in Example 2 to prepare a frit.

The Na concentration in the obtained frit was determined by ICP atomic emission spectroscopy under the above-mentioned measurement conditions. The results are shown in Table 2.

### (3-5. Glaze composition for glass lining)

The frit obtained above was stirred in the same manner as in Example 2 to obtain a slurry-like glaze composition for glass lining.

The Na concentration in the obtained glaze composition for glass lining was determined by ICP atomic emission spectroscopy under the above-mentioned measurement conditions. The results are shown in Table 2.

### (3-6. Glass lining layer)

A glass lining layer was obtained under the same conditions as in Example 2 using the glaze composition for glass lining obtained above.

The Na concentration in the cover coat layer of the obtained glass lining layer was determined by ICP atomic emission spectroscopy under the above-mentioned measurement conditions. The results are shown in Table 2.

### <4. Comparative Example 1>

### (4-1. Raw material formulation)

A raw material formulation was prepared by mixing the powders of the respective components in a mixer in the prescribed ratios to obtain a frit having the composition shown in Table 1. However, as the raw material powders of the components used in this raw material formulation were commercially available products, which were not highly pure (95% by mass or less), the Na concentration was higher than in Example 1.

The Na concentration in the resulting raw material formulation was determined by ICP atomic emission spectroscopy under the above-mentioned measurement conditions. The results are shown in Table 2.

### (4-2. Coarsely pulverized product)

The raw material product obtained above was melted and rapidly cooled in the same manner as in Example 1 to obtain a coarsely pulverized product.

The Na concentration in the resulting coarsely pulverized product was determined by ICP atomic emission spectroscopy under the above-mentioned measurement conditions. The results are shown in Table 2.

### (4-3. Finely pulverized product)

The coarsely pulverized product obtained above was dry-pulverized in the same manner as in Example 1 to obtain a finely pulverized product.

The Na concentration in the resulting finely pulverized product was determined by ICP atomic emission spectroscopy under the above-mentioned measurement conditions. The results are shown in Table 2.

### (4-4. Frit)

The finely pulverized product obtained above was classified in the same manner as in Example 1 to prepare a frit.

The Na concentration in the obtained frit was determined by ICP atomic emission spectroscopy under the above-mentioned measurement conditions. The results are shown in Table 2.

### (4-5. Glaze composition for glass lining)

Using the frit obtained above, a glaze composition for glass lining was obtained in the same manner as in Example 1.

The Na concentration in the obtained glaze composition for glass lining was determined by ICP atomic emission spectroscopy under the above-mentioned measurement conditions. The results are shown in Table 2.

### (4-6. Glass lining layer)

A glass lining layer was obtained under the same conditions as in Example 1 using the glaze composition for glass lining obtained above.

The Na concentration in the cover coat layer of the obtained glass lining layer was determined by ICP atomic emission spectroscopy under the above-mentioned measurement conditions. The results are shown in Table 2.

### <5. Comparative Example 2>

### (5-1. Raw material formulation)

A raw material formulation was prepared by mixing the powders of the respective components in a mixer in the prescribed ratios to obtain a frit having the composition shown in Table 1. However, as the raw material powders of the components used in this raw material formulation were commercially available products, which were not particularly pure (98% by mass or less), the Na concentration was slightly higher than in Example 1. In addition, the Na concentration in this raw material formulation was equivalent to that of the raw material formulation used in the Examples of Japanese Patent No. 5,191,384.

The Na concentration in the resulting raw material formulation was determined by ICP atomic emission spectroscopy under the above-mentioned measurement conditions. The results are shown in Table 2.

### (5-2. Coarsely pulverized product)

The raw material formulation obtained above was melted and rapidly cooled in the same manner as in Example 1 to obtain a coarsely pulverized product.

The Na concentration in the resulting coarsely ground product was determined by ICP atomic emission spectroscopy under the above-mentioned measurement conditions. The results are shown in Table 2.

### (5-3. Finely pulverized product)

The coarsely pulverized product obtained above was dry-pulverized in the same manner as in Example 1 to obtain a finely pulverized product.

The Na concentration in the resulting finely pulverized product was determined by ICP atomic emission spectroscopy under the above-mentioned measurement conditions. The results are shown in Table 2.

### (5-4. Frit)

The finely pulverized product obtained above was classified in the same manner as in Example 1 to prepare a frit.

The Na concentration in the obtained frit was determined by ICP atomic emission spectroscopy under the above-mentioned measurement conditions. The results are shown in Table 2.

### (5-5. Glaze composition for glass lining)

Using the frit obtained above, a glaze composition for glass lining was obtained in the same manner as in Example 1.

The Na concentration in the obtained glaze composition for glass lining was determined by ICP atomic emission spectroscopy under the above-mentioned measurement conditions. The results are shown in Table 2.

### (5-6. Glass lining layer)

A glass lining layer was obtained under the same conditions as in Example 1 using the glaze composition for glass lining obtained above.

The Na concentration in the cover coat layer of the obtained glass lining layer was determined by ICP atomic emission spectroscopy under the above-mentioned measurement conditions. The results are shown in Table 2.

**Table 2**

| | Na concentration (mass ppm) | | | | |
|---|---|---|---|---|---|
| Analysis target | Compartive Example 1 | Compartive Example 2 | Example 1 | Example 2 | Example 3 |
| Raw material formulation | 500 | 140 | 10 | 140 | 10 |
| Coarsely pulverized product | 650 | 290 | 160 | 160 | 30 |
| Finely pulverized product | 720 | 360 | 230 | 160 | 30 |
| Frit | 720 | 360 | 230 | 160 | 30 |
| Glaze composition | 750 | 390 | 260 | 190 | 60 |
| Glass lining layer | 750 | 390 | 260 | 190 | 60 |

### <6. Na elution test>

A Na elution test was performed by immersing each of the glass-lined round bars (without water washing) produced in the Examples and Comparative Examples in 100 mL of pure water (specific resistance at 25 °C: 0.5 MΩ·cm) at 50 °C in a PTFE container for 100 hours. After the test, the concentrations of Na, Li, Ba, Al, Ni, K, Ca and Fe in the pure water were analyzed by Inductively Coupled Plasma mass spectroscopy (ICP mass spectroscopy) using an Agilent Technologies Inc. (model: Agilent 7900) to evaluate the amount of Na elution. The results are shown in Table 3. It can be seen from the results in Table 3 that in Examples 1 to 3, the amount of Na elution could be reduced to 10 ppb by mass or less.

**Table 3**

| | Elution amount (mass ppb) | | | | |
|---|---|---|---|---|---|
| Element | Compartive Example 1 | Compartive Example 2 | Example 1 | Example 2 | Example 3 |
| Na | 24 | 11 | 7 | 5 | 2 |
| Li | <1 | <1 | <1 | <1 | <1 |
| Ba | 2 | 2 | 2 | 2 | 1 |
| Al | <1 | <1 | <1 | <1 | <1 |
| Ni | <1 | <1 | <1 | <1 | <1 |
| K | 3 | 3 | 3 | 2 | 1 |
| Ca | 3 | 3 | 3 | 3 | 2 |
| Fe | <1 | <1 | <1 | <1 | <1 |

### <7. Relationship between water washing and amount of Na eluted>

### (Washing times: 0)

The round bars with a glass lining layer according to the Examples 2 and 3 were prepared again. First, without washing, the Na elution test was carried out on each of the round bars with a glass lining layer. In the Na elution test here, ultrapure water was used instead of pure water. This is because the amount of elution increases when ultrapure water is used, making the relationship between the number of water washes and the amount of Na elution more evident. Specifically, the Na elution test was carried out by immersing the sample in 100 mL of ultrapure water (specific resistance at 25 °C: 18.0 MΩ·cm) at 50 °C in a PTFE container for 100 hours. After the test, the concentrations of Na, Li, Ba, Al, Ni, K, Ca and Fe in the ultrapure water were analyzed by Inductively Coupled Plasma mass spectroscopy (ICP mass spectroscopy) using an Agilent Technologies (Model: Agilent 7900) to evaluate the amount of Na elution. The results are shown in Table 4.

### (Washing times: 3)

The round bars with a glass lining layer according to the Examples 2 and 3 were prepared again. Next, each round bar with a glass lining layer was washed (for the first time) by immersing it in 170 mL of ultrapure water (specific resistance at 25 °C: 18.0 MΩ·cm) at room temperature (25 °C) for 1 hour. After the first washing, the ultrapure water used for washing was replaced with fresh ultrapure water, and then a second washing was performed under the same conditions. After the second washing, the ultrapure water used for washing was replaced with fresh ultrapure water, and then a third washing was performed under the same conditions. Thereafter, the round bar with the glass lining layer was pulled out and subjected to the same Na elution test using ultrapure water as above. The results are shown in Table 4.

### (Washing times: 6)

After 6 times of washing in the same manner as in "Washing times: 3", the round bar with the glass lining layer was pulled out and subjected to the same Na elution test using ultrapure water as above. The results are shown in Table 4.

### (Washing times: 9)

After 9 times of washing in the same manner as in "Washing times: 3", the round bar with the glass lining layer was pulled out and subjected to the same Na elution test using ultrapure water as above. The results are shown in Table 4.

**Table 4**

| | Washing times | 0 | 3 | 6 | 9 |
|---|---|---|---|---|---|
| Na elution amount (mass ppb) | Example 2 | 55 | 35 | 15 | 10 |
| | Example 3 | 23 | 9.7 | 6.5 | 5.4 |

| | | | | | |
|---|---|---|---|---|---|
| *Washed with ultrapure water at 25 °C | | | | | |

### <8. Relationship between washing water quality and amount of sodium elution>

A required number of the round bars with the glass lining layer according to Example 2 were prepared again for the following washing test. Each of the round bars with the glass lining layer was washed using different washing water with different washing times as shown in Table 5. Each washing was performed by immersing in 170 mL of washing water for 1 hour, and the washing water was replaced with fresh washing water after each washing. After washing, the round bar with the glass lining layer was pulled out and subjected to a Na elution test using ultrapure water as described in <7. Relationship between water washing and amount of Na eluted>. The results are shown in Table 5. Details of the washing water shown in Table 5 are as follows.

### (Washing water)

Ultrapure water at 50 °C (specific resistance at 25°C: 18.0 MΩ·cm)
- 1% hydrochloric acid at 80 °C (to demonstrate washing performance in acidic liquid)
- Pure water at 25 °C (specific resistance at 25 °C: 1.0 MΩ·cm)

**Table 5**

| | | Washing times (times) | | | |
|---|---|---|---|---|---|
| | Washing water | 0 | 3 | 6 | 9 |
| Na elution amount (mass ppb) | Ultrapure water at 50 °C | 55 | 19 | 9.4 | 7.8 |
| | 1% hydrochloric acid at 80 °C | | 40 | 20 | 10 |
| | Pure water at 25 °C | | 53 | 19 | 14 |

## Claims

1. A frit, comprising SiO₂ as a main component, and having a Na concentration of 300 mass ppm or less as determined by ICP atomic emission spectroscopy.

2. The frit according to claim 1, comprising 40 to 75% by mass of SiO₂, 0 to 10% by mass of ZrO₂, 8 to 22% by mass of R₂O (wherein R represents one or more selected from a group consisting of Li, K, and Cs), and 1 to 7% by mass of R'O (wherein R' represents one or more selected from a group consisting of Mg, Ca, Sr, and Ba).

3. The frit according to claim 1, wherein the Na concentration is 200 mass ppm or less.

4. The frit according to claim 1, wherein the Na concentration is 100 mass ppm or less.

5. The frit according to claim 1, wherein a median diameter when a cumulative particle size distribution on a volume basis is measured by a laser diffraction method is 1.5 to 20 µm.

6. A method for producing a frit, the method comprising:
a step 1 of preparing a raw material formulation comprising SiO₂ as a main component and having a Na concentration of 150 mass ppm or less as determined by ICP atomic emission spectroscopy;
a step 2 of melting the raw material formulation placed in a crucible in a melting furnace, followed by rapid cooling to obtain a coarsely pulverized product, in which conditions for carrying out the step 2 comprise selecting materials for composing the crucible and an inner wall, a ceiling, and a hearth of the melting furnace, such that a concentration of Na contained in the coarsely pulverized product determined by ICP atomic emission spectroscopy is 200 mass ppm or less;
a step 3 of obtaining a finely pulverized product by pulverizing the coarsely pulverized product, in which conditions for carrying out the step 3 comprise selecting a material that comes into contact with the coarsely pulverized product during the pulverization, such that a concentration of Na contained in the finely pulverized product determined by ICP atomic emission spectroscopy is 250 mass ppm or less; and
a step 4 of obtaining a frit by classifying the finely pulverized product, in which conditions for carrying out the step 4 comprise selecting a material that comes into contact with the finely pulverized product during the classification, such that a concentration of Na contained in the frit determined by ICP atomic emission spectroscopy is 300 mass ppm or less.

7. The method according to claim 6, wherein the raw material formulation prepared in the step 1 comprises 40 to 75% by mass of SiO₂, 0 to 10% by mass of ZrO₂, 8 to 22% by mass of R₂O (wherein R represents one or more elements selected from a group consisting of Li, K, and Cs), and 1 to 7% by mass of R'O (wherein R' represents one or more elements selected from the group consisting of Mg, Ca, Sr, and Ba).

8. The method according to claim 6,
wherein the conditions for carrying out the step 2 comprise selecting a material for composing the crucible, such that the concentration of Na contained in the coarsely pulverized product is 180 mass ppm or less,
wherein the conditions for carrying out the step 3 comprise selecting a material that comes into contact with the coarsely pulverized product during the pulverization, such that the concentration of Na contained in the finely pulverized product is 190 mass ppm or less, and
wherein the conditions for carrying out the step 4 comprise selecting a material that comes into contact with the finely pulverized product during the classification, such that the concentration of Na contained in the frit is 200 mass ppm or less.

9. The method according to claim 6,
wherein the raw material formulation prepared in the step 1 has a Na concentration of 50 ppm by mass or less,
wherein the conditions for carrying out the step 2 comprise selecting a material for forming the crucible, such that the concentration of Na contained in the coarsely pulverized product is 80 mass ppm or less,
wherein the conditions for carrying out the step 3 comprise selecting a material that comes into contact with the coarsely pulverized product during the pulverization, such that the concentration of Na contained in the finely pulverized product is 90 mass ppm or less, and
wherein the conditions for carrying out the step 4 comprise selecting a material that comes into contact with the finely pulverized product during the classification, such that the concentration of Na contained in the frit is 100 mass ppm or less.

10. The method according to any one of claims 6 to 9, wherein the frit obtained in the step 4 has a median diameter of 1.5 to 20 µm when a cumulative particle size distribution on a volume basis is measured by a laser diffraction method.

11. A glaze composition for glass lining, comprising the frit according to any one of claims 1 to 5 and a dispersion medium.

12. A method for forming a glass lining layer, comprising applying the glaze composition for glass lining according to claim 11 to a surface of a substrate, followed by firing to form a glass lining layer.

13. The method for forming a glass lining layer according to claim 12, further comprising washing a surface of the glass lining layer after the firing with water.

14. A glass lining layer comprising SiO₂ as a main component, and having a Na concentration of 300 mass ppm or less as determined by ICP atomic emission spectroscopy.

15. The glass lining layer according to claim 14, comprising 40 to 75% by mass of SiO₂, 0 to 10% by mass of ZrO₂, 8 to 22% by mass of R₂O (wherein R represents one or more selected from the group consisting of Li, K, and Cs), and 1 to 7% by mass of R'O (wherein R' represents one or more selected from the group consisting of Mg, Ca, Sr, and Ba).

16. The glass lining layer according to claim 14, wherein the Na concentration is 200 mass ppm or less.

17. The glass lining layer according to claim 14, wherein the Na concentration is 100 mass ppm or less.

18. A glass lined product comprising the glass lining layer according to any one of claims 14 to 17.
